Europäisches Patentamt

European Patent Office

Office européen des brevets

(11) Publication number: **0 247 245**
**A1**

(12) **EUROPEAN PATENT APPLICATION**

(21) Application number: 86200902.4

(51) Int. Cl.⁴: **A23L 2/20** , A23L 2/28

(22) Date of filing: 23.05.86

(43) Date of publication of application:
**02.12.87 Bulletin  87/49**

(84) Designated Contracting States:
**AT BE CH DE FR GB IT LI LU NL SE**

(71) Applicant: **THE PROCTER & GAMBLE
COMPANY
One Procter & Gamble Plaza
Cincinnati Ohio 45202(US)**

(72) Inventor: **Moore, Katherine L.
10 Avenue de Venezuela
B-1050 Bruxelles(BE)**
Inventor: **Dake, Timothy W.
2526 Willowspring Court
Cincinnati, OH 45231(US)**
Inventor: **McBride, Joseph E.
1642 Aspenhill Drive
Cincinnati, OH 45240(US)**

(74) Representative: **Suslic, Lydia et al
Procter & Gamble European Technical
Center N.V. Temselaan 100
B-1820 Strombeek-Bever(BE)**

(54) **Juice sterilization process.**

(57) Disclosed herein is a method for sterilizing juices that retains the aroma and flavor in the sterilized juice. The process comprises:

(1) heating juice concèntrate (of at least 12.5° Brix) to a temperature of about 220°F to about 300°F by means of direct contact steam infusion for a period of about 0.5 to about 15 seconds to sterilize the juice;

(2) cooling the product to below about 220°F by releasing the pressures resulting in an immediate temperature drop;

(3) recondensing substantially all the vapors into the juice; and

(4) quickly chilling the product to about 30°F to about 60°F.

Fig. 1

## JUICE STERILIZATION PROCESS

### FIELD OF THE INVENTION

This invention relates to a process for sterilizing concentrated juices and fluid foods without loss of the volatile aroma and flavor components.

### BACKGROUND OF THE INVENTION

In order to produce a shelf-stable food such as a fruit juice or vegetable juice, the product must be sterilized. Sterilization means that all the microorganisms, yeast, mold and bacteria are killed or rendered inactive. Pasteurization indicates that most microorganisms have been killed or rendered inactive. The amount of microbe activity remaining in the food or juice is a direct function of both the processing time and temperature.

Ultrahigh temperature processing is typically identified as processing at 275°F to 300°F for a few seconds. The time is variable, e.g. less than a second to as much as 30 seconds can be used. The advantage to ultrahigh temperature processing lies in the fact that the rate of microbe kill or inactivation increases faster at ultrahigh temperatures than the rate of the chemical degradation of the product. Chemical degradation is generally measured as caramelization of the sugars. However, chemical degradation also involves browning or Maillard reactions which are reactions of the amino acids and the sugars to produce off-flavors. Oxidation of important aroma and flavour materials and lipids is also a type of chemical degradation.

In indirect heat exchangers, either the shell and tube or plate type, the product quality tends to be poor. This is because the product is exposed to very high surface temperatures for a relatively long time due to inefficient heat transfer,

Direct heat exchange methods are capable of reducing the length of time the product is exposed to high temperatures. Direct heat exchange methods include both steam injection and steam infusion. However, vacuum flashing is then normally required to remove the water that has been added to the product as condensed steam. Vacuum flashing also provides instantaneous cooling. The product then loses important flavor and aroma volatiles as well as the water in vacuum flashing. The juice can be rendered unstable due to high shear or localized overheating in the steam injection system.

Steam infusion is a preferred method for sterilizing fruit juices. The liquid product falls in thin films or sheets through a pressurized steam atmosphere. The steam condenses within the product. This causes the product to be instantaneously heated by the release of the latent heat of the steam. However, the product is diluted by an amount of water directly related to the desired temperature rise. A major feature of a steam infusion sterilization process is that the product is heated instantaneously, it does not have to contact any excessively hot surfaces, and there is no high shear. Since there are no moving parts to trap pulp and pectin, the product flow is smooth.

However, even these systems use flash cooling to remove the steam and, inadvertently, the important aroma and flavor volatiles. Applicants have found a method of improving this process by releasing the pressure and cooling the product in a closed system. The product can then be passed through a heat exchanger which is totally enclosed to cool the product further. Thus, the volatiles in the product are thoroughly chilled before leaving the system and the volatiles have an opportunity to recondense into the product. The product is, however, more dilute than the feed liquid. Thus, this process represents an improvement on a process for sterilizing concentrates.

It has also been found that the temperature and residence time at any temperature must be controlled to avoid developing cooked flavors in the product. This temperature/time profile is an important part of the sterilization process.

Therefore, it is an object of this invention to produce sterilized fruit juice and vegetable juice concentrates and fluid foods which retain their volatiles and which do not have cooked or browned or oxidized off-flavors.

It is a further object of this invention to sterilize juice concentrate in a manner in which the product is exposed to a minimum amount of high temperature.

It is also an object of this invention to produce a sterilized juice which is equivalent in flavor and aroma to the diluted feed juice.

These and other objects will become obvious from reading the following disclosure.

DESCRIPTION OF THE FIGURES

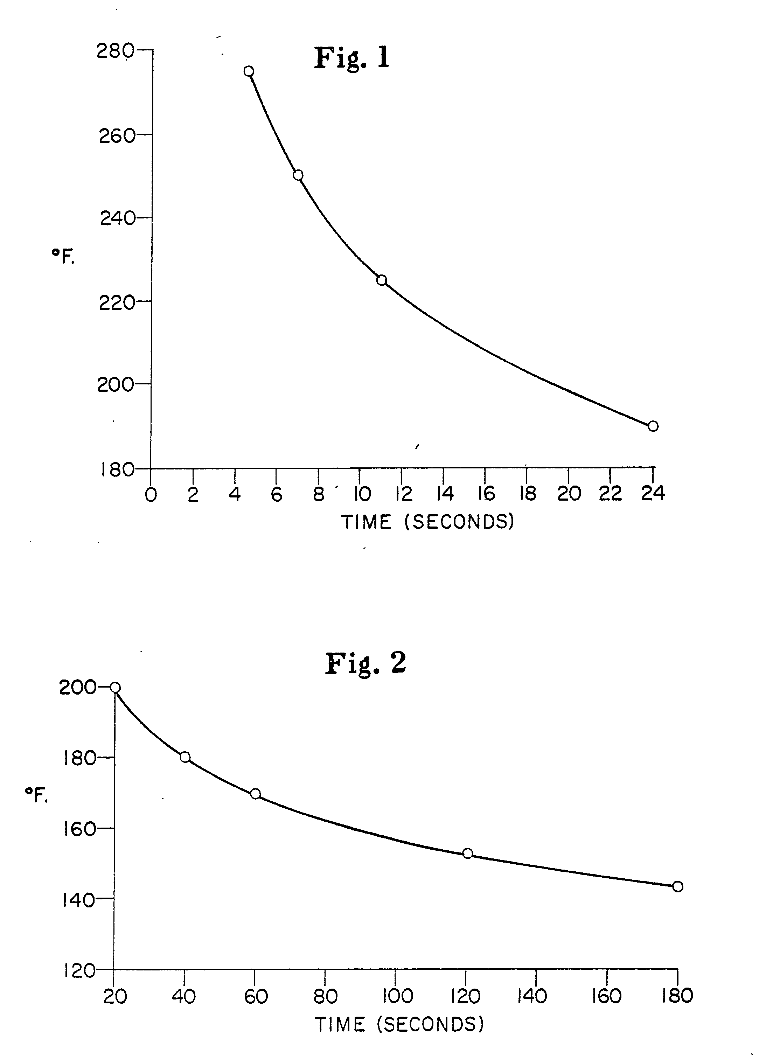

Figures 1 and 2 represent time temperature graphs for the sterilization of citrus juice concentrates. By keeping the total processing time within the area defined by these curves, no additional cooked flavors will be developed in the sterilized juice.

DESCRIPTION OF THE INVENTION

The process herein is applicable to most fluid foods which require sterilization for shelf stability. It can be used to sterilize creamed vegetables, as well as vegetable juices and fruit juices. The process is equally applicable to extracts of vegetable materials such as tea, coffee, cocoa, vanilla and other flavorants. The term fluid foods encompasses fruits and vegetable juices, extracts of fruits, vegetables and meat, as well as other edible fluids. The term fluids means material which is pumpable at the processing temperatures.

The process for sterilizing the juices herein can be used on any fruit or vegetable juice. Fruits include apples, tomatoes, grapes, as well as the citrus juices such as orange, lemon, grapefruit and tangerine. Vegetable juices would include blends of vegetable juices such as juices obtained by puree or squeezing carrots, celery, etc. As used herein, juice encompasses fruit and vegetable juices. Aromatic beverages such as tea and coffee also can be included in the class of materials to which this technology is applicable.

Pulp or pectin may be present in juice during the process since the infusion process and manipulation does not destroy the particulate solids. Small particles of vegetables can also be present as in a creamed corn product.

Microorganisms are destroyed by heat when the microbial proteins coagulate and the enzymes required for their metabolism are inactivated. The heat treatment necessary to kill microorganisms or their spores varies with the kind of organisms, the environment during heating, and state of the organisms.

However, as the temperature is increased so does the rate of the browning or Maillard reaction, i.e. the reaction of amino acids and proteins with reducing sugars to produce burnt, cooked or off-flavor. In addition, oxidation reactions also increase with increasing temperature. Therefore, it is necessary during the processing of foods containing these materials, in particular fruit juice, to minimize the amount of residence time or contact time that the foods have with high temperatures. The length of time is of course dependent upon the temperature. Thus, a food can be maintained at 40°F for a much greater length of time, (measured in days) versus the time that it can be maintained at temperatures above 260°F which is measured in seconds.

A very important part of the processing parameters with respect to production of a sterilized food which does not have noticeable off-flavor, cooked flavor, browned flavor or oxidized flavor is the control of the residence time or contact time of the food with high temperatures. This total contact time is particularly important for citrus juices such as orange juice or grapefruit juice.

The total contact time for citrus juices must be within the limits as outlined in the following Table:

| Temperature | Time |
| --- | --- |
| 280°F | 4 seconds |
| 250°F | 7 seconds |
| 220°F | 12 seconds |
| 200°F | 19 seconds |
| 190°F | 24 seconds |

The time is the amount of time that it takes for a juice held at that temperature to develop a cooked off-flavor. The area under the curve in Figure 1 represents the safe zone for citrus juices.

For temperatures below 200°F, Figure 2 represents the zone for processing citrus juices without development of cooked off-flavor. The total exposure must not exceed these limits.

For sterilizing juices, the starting juice concentrate should be at a minimum of 12.5° Brix (percent solids). The use of the steam infusion causes a dilution of the product during the sterilization process. Therefore, the actual minimum solids level or concentration will depend in part on the amount of water added to the product. The use of a 12° to 16° Brix range concentration produces a juice having a final concentration of 11.8° Brix. Concentrates as high as 70% solids can be used. The maximum percentage depends not only on the percent solids but on the viscosity of the material.

Very viscous materials are hard to handle and flow through the infusion heater too slowly. Therefore for practical purposes juices of 12% to 70%, and preferably 40% to 70% are used.

Preferably, the starting concentrate will have been made by a method which preserves the aroma and flavor volatiles. Such a process is freeze concentration or freeze drying under conditions which retain the volatiles. Processes as those disclosed in European Patent Applications Numbers 44748 and 44747 published in January 1982, are preferred.

The process herein is equally applicable to juices which have been concentrated using evaporation processes. By keeping the juice within the time/temperature profiles outlined in the area beneath the curve in Figures 1 and 2, no additional off-flavors or cooked flavors will be developed in the juice.

The starting concentrate can be passed through a preheater. Preheating can be used so long as the time temperature exposure is measured. Concentrate can be raised to temperatures as high as about 150°F in a preheater.

The concentrate is then pumped into an infusion heater. These types of equipment are available from the Crepaco food equipment and refrigeration company. Other companies which supply steam infusion systems are Cherry-Burrell and DASI.

The juice is mixed with steam. The direct contact, steam heating raises the product temperature almost instantaneously to that desired. Heating is accomplished by the intermingling of the steam with the feed juice and by the complete condensation of the steam into the product. The final temperature may range from 220°F (104°C) to as high as 300°F (149°C).

The steam is pressurized to about 3 pounds per square inch (psi) to about 7 psi above the saturation point of the product for steam. Since there is no barrier between the concentrate and the steam, all the steam is condensed.

The amount of water added to the concentrate can be accurately calculated from the temperature range through which the feed concentrate is heated and the flow rate of the product through the system.

In a preferred system, hot product from the infusion heater flows through a section of tubing through a back pressure valve. The product flashes or expands into a chamber. The improved process herein requires that this chamber be a closed system so that all of the water and volatiles which are vaporized through the flashing operation are condensed within the product. The reduced pressure or vacuum is controlled to a point consistent with the amount of cooling, i.e. flashing of vapors, or evaporation desired. Cooling by the vapor removal is almost instantaneous.

The product is then condensed and cooled through a bank of heat exchangers. This cooling system is also closed so that any vapors, including the water vapors, are recondensed within the juice. The final temperature of the juice is 30°F to 60°F.

Substantially all of the volatile aroma and flavor components are recondensed into the juice. By "substantially all" is meant at least 90%.

In order to conserve energy and make the most economical use of the concentrate, the water and concentrate can be sterilized independently of each other. In other words, if the object is to produce a sterilized juice of 11° Brix, one can start with a juice of 65° Brix which is sterilized. This sterilized 65° Brix juice, when processed as above will have a final concentration of about 52° Brix. Then, in order to make the desired 11° Brix juice, sterilized water is added.

Any method of sterilizing water that does not impart off flavors is acceptable, such as irradiation (gamma rays), ozonation, hyperchlorination followed by carbon absorption, and ultraviolet radiation.

The water can also be sterilized using an interchanger to preheat and precool the water before and after the sterilizing heater. Since the water contains no volatiles, the requirement that the water be sterilized in a closed system is unnecessary. The hot sterilized concentrate can then be mixed with the cold sterilized water to give rapid cooling through the mixing action instead of requiring a heat exchanger to cool the product directly. Either a static mixer or homogenizer can be used to mix the water and sterilized concentrate.

This mixing with cold sterilized water can be used to replace part of the heat exchanger immediately following the flash cooling. This process reduces energy consumption by as much as 50%.

The product is then packaged in cardboard, glass or plastic containers. For long term storage aseptic packaging is used.

The concentration process, preheating, infusion heating, and cooling are all subject to the requirement that the total residence time at any one temperature must be calculated so that the flavor and aroma of the food, juice or juice concentrate is not destroyed by residence at too high a temperature for too long.

The development of cooked or off-flavors can be determined by analytical methodology or by expert flavor testing.

This data for Figures 1 and 2 were determined by doing triangle testing of experts on orange juices held at specific temperature for the length of time specified. When a degree of difference between two samples was detected by 11 panelists out of 20, it was determined to have a cooked or off-flavor.

## EXAMPLE 1

A concentrate is prepared from Valencia orange juice which had been pasteurized at 190°F for 7 seconds residence time before concentration. The pulp is removed from the juice before pasteurization. The juice is concentrated using freeze concentration to a concentration of 50° Brix.

The 50° Brix orange juice concentrate is then diluted to 21° Brix with distilled water. The diluted orange juice (temperature of about 45°F) is used as the feed juice. A Crepaco Ultratherm Model 500 infusion heater piped to a Crepaco back pressure valve which is then piped to a Crepaco plate and frame heat exchanger is used for the sterilization. The piping of the system in this manner causes the system to be enclosed so that substantially all the volatiles are returned.

The juice is fed into the infusion heater at a temperature of about 45°F. Sterilization temperature is about 275°F. The temperature after passing through the back pressure valve is about 220°F as measured at the inlet to the heat exchanger. The material coming out of the heat exchanger has a temperature of about 57°F. The residence time at 275°F is measured at about 2.6 seconds. The distribution of time ranges from about 2.3 to about 6 seconds.

The final product concentration is 14.5° Brix. Microbial count is less than 10 per gram of sample, even when the sample was incubated.

A gas chromatographic analysis of the volatiles in the headspace of the juice indicates the following:

| Material | Starting Concentrate | Final |
|---|---|---|
| Ethanol | 11.8 | 8.25 |
| Ethyl butyrate | 0.189 | 0.170 |
| Limonene | 84.7 | 88.0 |
| High to low ratio* | 0.137 | 0.104 |

*This is the ratio of the highly volatile materials to the lesser volatile materials.

The gas chromatographic analysis was performed according to the procedure described in European Patent Application 44747, published January, 1982.

## EXAMPLE 2

An orange juice concentrate of about 65° Brix prepared by conventional evaporation is sterilized according to the procedure of Example 1. The final concentration of this juice is 41.8° Brix.

When this juice is diluted to a concentration of about 11.5° Brix using sterilized water, a juice equivalent to fresh squeezed juice is produced. The volatiles in the sterilized concentrate are substantially the same as those in the starting juice.

## EXAMPLE 3

An orange juice concentrate is made from a blend of Valencia, Hamlets and Pineapple oranges was prepared according to Example 1. A concentrate of about 50° Brix is used. This juice is the feed material for a Crepaco Ultratherm Model 500 infusion heater which was piped to a Crepaco back pressure valve which was then piped to a static mixer where water was added. Water of a temperature of about 45°F was added. This causes the rapid cooling of the juice as well as dilution to a concentration of about 11.8° Brix which is the measure for single strength juice. The final juice is microbiologically stable. Its taste is equivalent to that of the fresh squeezed juice in both aroma and flavor.

The sterilized product made from this juice has retained 90% of the aroma and flavor volatiles originally present in the concentrate. These aroma and flavor volatiles contribute importantly to the flavour of the final product.

When this juice is diluted to a concentration of 14.8° Brix using sterilized water, a juice equivalent to fresh squeezed juice and aroma and flavor is produced. This juice is microbiologically stable.

## Claims

1. A method for sterilizing a fluid food comprising:
   (1) heating juice concentrate of at least 15° Brix to a temperature of about 220°F to about 300°F by means of direct contact steam infusion for about 0.5 seconds to about 15 seconds;
   (2) rapidly cooling the product to below about 220°F;
   (3) recondensing substantially all the vapors into the juice; and
   (4) chilling the product to a temperature of about 30°F to about 60°F.

2. A process according to Claim 1 wherein said fluid food is fruit juice.

3. A process according to Claim 2 wherein said juice is citrus juice.

4. A method according to Claim 3 wherein the rapid cooling is flash cooling.

5. A method according to Claim 4 wherein the flash cooling is accomplished by release of pressure.

6. A method according to Claim 5 wherein the starting juice concentrate has a concentration of between 25° Brix and 70° Brix.

7. A method according to Claim 6 wherein the chilling is done by mixing the concentrate with cold sterilized water.

8. A method according to Claim 7 wherein the juice concentrate is prepared by freezing concentration.

9. A method according to Claim 8 wherein the juice is preheated to about 150°F.

10. A sterilized juice concentrate containing substantially all the vapors present in the feed juice.

11. A concentrate according to Claim 10 wherein the juice is citrus juice.

12. A concentrate according to Claim 11 wherein the juice is orange juice.

0 247 245

Fig. 1

°F.

TIME (SECONDS)

Fig. 2

°F.

TIME (SECONDS)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 166 127 (W. SCHMIDT GMBH) * page 2, paragraphs 4, 5; page 4, paragraph 3, claims 1-5 * | 1,2,4, 7 | A 23 L 2/20 A 23 L 2/28 |
| D,A | EP-A-0 044 747 (THE PROCTER & GAMBLE CO.) * example 1, claim 1 * | 8,11, 12 | |
| A | GB-A- 954 378 (A.P.V. CO. LTD.) * claims 1, 4, 5 * | 1 | |
| A | GB-A-2 137 070 (R. TORTEROTOT) * claims 1-4, 16 * | 1 | |

TECHNICAL FIELDS SEARCHED (Int. Cl.4)

A 23 L 2/00

The present search report has been drawn up for all claims

| Place of search | Date of completion of the search | Examiner |
|---|---|---|
| BERLIN | | SCHULTZE |